# EUROPÄISCHE PATENTANMELDUNG

(11) **EP 2 626 037 A1**
(43) Veröffentlichungstag der Anmeldung: **14.08.2013**
(21) Anmeldenummer: 13152538.8
(22) Anmeldetag: 24.01.2013
(51) Int. Cl.: A61C 19/05

(54) **Abdruckvorrichtung**

(30) Priorität: 07.02.2012 DE 202012100404 U
(71) Anmelder: Prodinger-Glöckl, Dorothea, 85551 Kirchheim b. München (DE)
(72) Erfinder: Prodinger-Glöckl, Dorothea, 85551 Kirchheim b. München (DE)
(74) Vertreter: Peter, Julian

(57) **Zusammenfassung**

Es ist eine Vorrichtung (100) zum sichtbar machen von Zahnfehlkontakten beim menschlichen Kieferschluss (Okklusion) (400) angegeben. Zahnfehlkontakte beim menschlichen Kieferschluss (400) können als Ursache von Folgebeschwerden wie Verspannungen der Kiefermuskulatur, Kopfschmerzen oder psychischen Symptomen auftreten. Die Vorrichtung (100) weist ein flächiges Abdrucksubstrat (102) auf, das im Wesentlichen eine Form eines Bogenrings, eines halben Ellipsenrings oder eines Halbkreisrings aufweist und zwischen die Zähne (403, 405) des Oberkiefers (402) und des Unterkiefers (404) gelegt werden kann sowie unter Druck (410, 412) den genauen Ort des Drucks (414, 416) anzeigt.

## Beschreibung

Die Erfindung betrifft eine Vorrichtung zum sichtbar machen von Zahnfehlkontakten beim menschlichen Kieferschluss (Okklusion).

Einer Fehlstellung von Zahnkontakten beim Schließen des menschlichen Kauapparates liegt in der Regel eine Störung der Kieferngelenke zugrunde, wobei eine solche Störung sich in unterschiedlichen Symptomen wie Schmerzen im Kiefer und Gesichtsbereich, Kiefermuskeln, Zähne, Gelenke, Schultergürtel, Wirbelsäule und im Gehör äußert.

Störungen der Okklusion, sogenannte Cranio-Mandibuläte Dysfunktionen, können mit einer großen Anzahl von klinischen Beschwerden zusammenhängen. Die häufigsten Symptome sind Schmerzen, Gelenkknacken, Parafunktionen, Eingeschränkte Unterkieferbewegung, Überbeweglichkeit des Unterkiefers, Gelenkentzündungen und Ohrgeräusche.

Schmerzen im Kiefer- und Gesichtsbereich sind häufig ein Hinweis darauf, dass eine schädigende Ursache existiert. Zudem liegen in dieser Region viele Strukturen eng beieinander, die für die Schmerzen verantwortlich sein können. Dazu zählen u.a. die Zähne, Muskeln, Gelenke, Schultergürtel, Wirbelsäule und Gehörgänge.

Kiefergelenkgeräusche kommen häufig beim Kauen oder Öffnen des Mundes vor. Sie sind ein Zeichen für Funktionsstörungen. Es kann zu Dyskoordination, Deviation, Deflexion und Supluxation bis hin zur Luxation kommen.

Bei Parafunktionen handelt es sich um untypische Funktionen wie z.B. das Knirschen oder Pressen. Hierbei ändern sich die Zahnkontakte von ca. 20 Minuten pro Tag bei gesunder Funktion auf meist mehrere Stunden. Beim Zähnepressen werden die Zahnreihen auf häufig sehr kraftvolle Weise für eine meist längere Zeitspanne krampfartig aufeinandergepresst. Hingegen werden beim Knirschen oder Reiben die Zähne stark aufeinander gerieben, wobei sich grobe Abrasionen (Abtragungsspuren) in die Zahnsubstanz eingraben können.

Ist die Mundöffnung oder Kieferbewegung eingeschränkt, spricht man auch von einer Kieferklemme. Diese kann durch Verspannungen der Muskulatur oder Störungen des Gelenks bedingt sein.

Bei weiter Öffnung des Mundes wie z.B. beim Gähnen kommt es vor, dass die Kiefergelenke ausrenken. Im schlimmsten Fall kann der Unterkiefer nicht wieder von selbst in die ursprüngliche Position gebracht werden.

Eine Arthrose der Kiefergelenke kann durch lang andauernde Belastungen verursacht werden. Als Folge dessen können im Bereich der Gelenke Schmerzen auftreten und es kann zudem zu Entzündungen der Gelenkfläche kommen. Diese wiederum können dafür verantwortlich sein, dass sich in den Gelenkspalten Verklebungen bilden, wodurch die Beweglichkeit des Gelenks stark eingeschränkt wird.

Da die Kiefergelenke durch die anatomische Lage eng mit den Ohren verbunden sind, wird angenommen, dass Ohrgeräusche durch eine verminderte Sauerstoffversorgung hervorgerufen werden können. Auch können Ohrgeräusche die Folge von Verspannungen im Nacken oder von bestimmten Kopfhaltungen sein.

Die Diagnostik bei Störungen der Kiefergelenke erfordert genaue Untersuchungen des gesamten Kausystems mit Kiefergelenken und den Zähnen, wobei eine Röntgenaufnahme angezeigt sein kann. Weitere Methoden sind die Elektromyographie zum Feststellen einer Verkrampfung der Kopfmuskulatur und auch die Kinesiographie zum Erfassen der Bewegung des Unterkiefers. Hierbei wird die exakte Lage der Zähne zueinander festgehalten. Ein weiteres Verfahren ist die Elektrosonographie, mit Hilfe derer die Lautstärke und Frequenz der Geräusche im Kiefergelenk aufgenommen werden können.

Zu den zahnärztlichen Methoden zählen zum einen Aufbissschienen aus Kunststoff, welche die Zähne, Kaumuskulatur und Kiefergelenke vor zu starken Belastungen schützen. Eine andere Maßnahme ist das Einschleifen, womit überstehende Kronen und Füllungen oder auch herausgewachsene Weisheitszähne als Störquellen beseitigt werden können. Zudem sind Zahnersatz sowie eine Behandlung durch einen Kieferorthopäden oder Kieferchirurgen möglich.

Der Erfindung liegt die Aufgabe zugrunde, dem Fachmann und fachübergreifenden Fachrichtungen eine preisgünstige und einfache Vorrichtung an die Hand zu geben, die es ihm ermöglicht, Okklusionsstörungen schnell festzustellen und so entsprechende Therapiemaßnahmen und genauere Untersuchungen zu ergreifen.

Die Aufgabe wird gelöst durch eine Vorrichtung zum sichtbar machen von Zahnfehlkontakten bei der menschlichen Okklusion gemäß dem unabhängigen Anspruch. Weiterbildungen und Ausgestaltungen der Erfindung sind in den abhängigen Ansprüchen verkörpert.

Die Aufgabe wird durch eine Vorrichtung zum sichtbar machen von Zahnfehlkontakten beim menschlichen Kieferschluss (Okklusion) als Ursache von durch die Fehlkontakte hervorgerufenen Beschwerden wie Verspannung der Kiefermuskulatur, Kopfschmerzen oder psychischen Symptomen gelöst, wobei ein flächiges Abdrucksubstrat vorgesehen ist, das im Wesentlichen eine Form eines Bogenrings, eines halben Ellipsenrings oder eines Halbkreisrings aufweist und zwischen die Zähne des Oberkiefers und des Unterkiefers gelegt werden kann, und das unter Druck den genauen Ort des Drucks anzeigt, beispielsweise über ein Druckstellenbild des Kiefer-Bisses auf dem Abdrucksubstrat.

Mit der erfinderischen Vorrichtung kann auf einfache, schnelle und kostengünstige Weise der Charakter einer Cranio-Mandibuläten Dysfunktionen erkannt werden. Die Vorrichtung kann ein eineindeutiges Druckstellenbild bereitstellen, bei dem die maßgeblichen Zahnkontakte präzise abgebildet sind, so dass eine Störung oder Fehlstellung des Kiefers von dem Druckstellenbild des Kiefer-Bisses von einem Fachmann erkannt werden kann.

Gemäß einem Aspekt der Erfindung weist das Abdrucksubstrat eine Trägerschicht und eine darauf angeordnete Signalschicht auf. Die Signalschicht kann eine Farbschicht sein, die an einer Druckstelle die Farbe verändert, wobei die Trägerschicht eine andere Farbe aufweisen kann als die Signalschicht. Die Druckstelle kann noch deutlicher sichtbar werden, wenn sich die Signalfarbe durch eine Schwächung der Farbe durch Verdrängung der Substanz unter einer Berührstelle des Zahns verändert oder zur Seite geschoben wird und die Farbe der Trägerschicht an der Druckstelle durchscheint.

Gemäß einem weiteren Aspekt der Erfindung sind eine obere Trägerschicht und eine untere Trägerschicht vorgesehen, die zwischen sich eine Signalschicht sandwichartig einschließen, was von besonderem Vorteil sein kann. Durch eine derartige Anordnung können beispielsweise die jeweiligen Kontaktpunkte der Zähne an dem Abdrucksubstrat mit hoher Sicherheit verifizierbar sein, da eine optische Veränderung sowohl auf der Oberseite als auch auf der Unterseite der Substratlage zu erkennen ist.

Hierbei kann es von Vorteil sein, dass gemäß einem weiteren Aspekt der Erfindung die Signalschicht eine Farbschicht ist, deren Farbpartikel unter Druck die Trägerschichten durchdringen und von außen auf der Trägerschicht sichtbar sind. Die Signalschicht kann unter einer Druckbelastung des Bisses plastisch verformbar sein und dem Druck ausweichen, so dass die Trägerschicht an dieser Stelle freigelegt und/oder zumindest teilweise sichtbar ist.

Das Abdrucksubstrat weist gemäß einer Ausführung ein Flächengewicht von zumindest 25g/m² auf mit einer Festigkeit, wie sie zum Beispiel bei Papier mit einer Grammatur von zumindest 20g/m² vorhanden ist. Vorzugsweise weist das Abdrucksubstrat ein Flächengewicht von 80g/m² bis 120g/m² auf mit einer entsprechenden Festigkeit. Durch das Bereitstellen einer bestimmten Steifigkeit des Abdrucksubstrats kann eine gute und effiziente Handhabung gewährleistet sein, wobei unterschiedliche Grammaturen vorgesehen sein können, um den Einfluss der Steifigkeit des Substrats auf das Testergebnis zu reduzieren.

Zur einfacheren Handhabung kann ein Griffbereich an dem Abdrucksubstrat vorgesehen sein, beispielsweise in einem vorderen oder mittleren Bereich eines Abdrucksubstrats in Form eines Bogenrings. Hierdurch kann das Substrat einfach ergriffen werden ohne einen Bissbereich des Abdrucksubstrats zu beeinträchtigen oder zu beschädigen.

Bei einem steiferen Substrat kann es vorteilhaft sein, dass die umlaufenden Kanten des Abdrucksubstrates gemäß einem Aspekt der Erfindung gerundet oder mit einer Fase, in anderen Worten, einer abgeschrägten Fläche, versehen sind.

Gemäß einer weiteren Ausführung der Erfindung erzeugt die Signalschicht unter Druckbelastung an den Bissdruckstellen ein elektrisches Signal, so dass die Orte der Bissdruckstellen zusätzlich über eine Auswertung des elektrischen Signals auswertbar bzw. feststellbar sind, wenn die Zähne mit dem Abdrucksubstrat bzw. der Signalschicht in Kontakt kommen.

In der Trägerschicht und/oder der Signalschicht können piezoelektrische Elemente angeordnet sein. Aufgrund des piezoelektrischen Effekts ist mechanische Verformungsenergie in elektrische Energie umwandelbar, so dass eine Verformungsenergie an der Trägerschicht und/oder der Signalschicht, die durch den Bissdruck über die Druckstellen an der Trägerschicht und/oder Signalschicht entsteht, an diesen Stellen mittels der piezoelektrischen Elemente in elektrische Energie bzw. elektrische Signale umwandelbar ist. Die elektrischen Signale können derart ausgewertet werden, dass die Bisstellen oder-orte feststellbar sind. Die piezoelektrischen Elemente können Quarzkristalle sein.

Die einzelnen Merkmale der verschiedenen Ausführungsbeispiele und Aspekte der Erfindung können auch untereinander kombiniert werden, wodurch sich zum Teil auch vorteilhafte Wirkungen einstellen können, die über die Summe der Einzelwirkungen hinausgehen, selbst wenn diese nicht ausdrücklich beschrieben sind.

Diese und andere Aspekte und Ausführungen sowie vorteilhafte Weiterbildungen der Erfindung werden durch Bezugnahme auf die hiernach beschriebenen beispielhaften Ausführungen und Figuren dargestellt und verdeutlicht.
- Figur 1: zeigt eine Draufsicht einer Vorrichtung zum sichtbar machen von Zahnfehlkontakten beim menschlichen Kieferschluss (Okklusion) mit einem Abdrucksubstrat gemäß einem Ausführungsbeispiel der Erfindung.
- Figur 2: zeigt eine seitliche Querschnittansicht einer Vorrichtung zum sichtbar machen von Zahnfehlkontakten beim menschlichen Kieferschluss (Okklusion) mit einem Abdrucksubstrat gemäß einem weiteren Ausführungsbeispiel der Erfindung, beispielsweise gemäß Figur 1.
- Figur 3: zeigt eine seitliche Querschnittansicht einer Vorrichtung zum sichtbar machen von Zahnfehlkontakten beim menschlichen Kieferschluss (Okklusion) mit einem Abdrucksubstrat gemäß einem weiteren Ausführungsbeispiel der Erfindung.
- Figur 4: zeigt eine seitliche Querschnittansicht eines Ausschnitts einer Vorrichtung zum sichtbar machen von Zahnfehlkontakten beim menschlichen Kieferschluss (Okklusion) mit einem Abdrucksubstrat gemäß Figur 2 zwischen einem Oberkiefer und einem Unterkiefer.

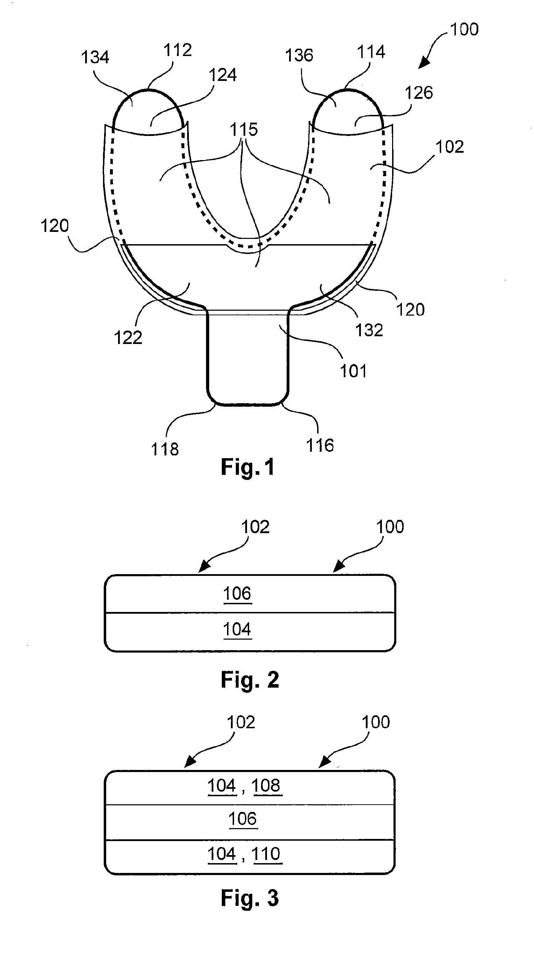

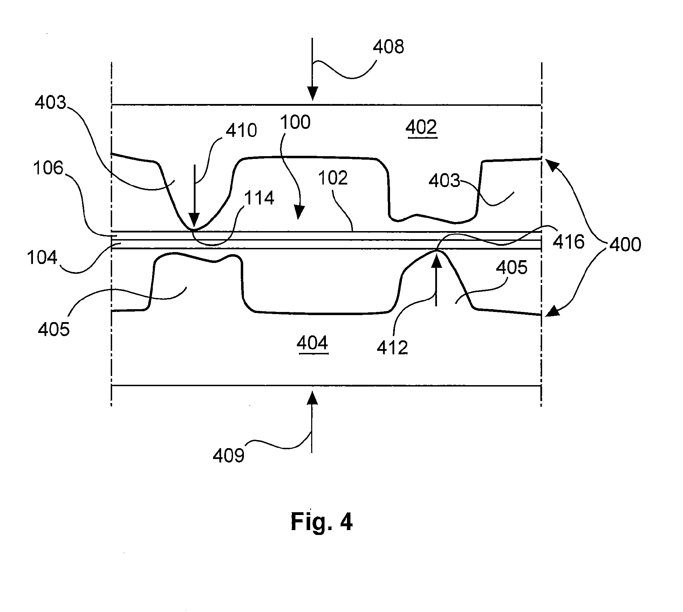

In Figur 1 ist eine Draufsicht einer Vorrichtung 100 zum sichtbar machen von Zahnfehlkontakten beim menschlichen Kieferschluss (Okklusion) (400, siehe Figur 4) als Ursache von durch die Fehlkontakte hervorgerufenen Beschwerden wie Verspannung der Kiefermuskulatur, Kopfschmerzen oder psychischen Symptomen dargestellt. Es ist ein flächiges Abdrucksubstrat 102 vorgesehen, das die Form eines Bogenrings aufweist. Das Abdrucksubstrat 102 kann im Wesentlichen eine Form eines Bogenrings, eines halben Ellipsenrings oder eines Halbkreisrings aufweisen und zwischen die Zähne (nicht gezeigt, siehe 403, 405 in Figur 4) des Oberkiefers (nicht gezeigt, siehe 402 in Fig. 4) und des Unterkiefers (nicht gezeigt, siehe 404 in Figur 4) eines Benutzers gelegt werden. Das Abdrucksubstrat 102 zeigt unter Druck (410, 412, siehe Figur 4) den genauen Ort des Drucks (414, 416, siehe Figur 4) an, beispielsweise über ein Druckstellenbild des Kiefer-Bisses auf dem Abdrucksubstrat 102.

Zur einfacheren Handhabung ist ein Griffbereich 101 in Form einer Haltelasche an dem Abdrucksubstrat 102 im mittleren Bereich des Abdrucksubstrats 102 in Form des Bogenrings. Hierdurch kann das Abdrucksubstrat 102 einfach ergriffen werden ohne einen Bissbereich 115 des Abdrucksubstrats 102 zu beeinträchtigen oder zu beschädigen.

Das Abdrucksubstrat 102 gemäß den Ausführungen der Figuren 1 bis 4 kann ein Flächengewicht von zumindest 25g/m² aufweisen mit einer Festigkeit, wie sie zum Beispiel bei Papier mit einer Grammatur von zumindest 20g/m² vorhanden ist. Vorzugsweise weist das Abdrucksubstrat 102 ein Flächengewicht von 80g/m² bis 120g/m² auf mit einer entsprechenden Festigkeit. Durch das Bereitstellen einer bestimmten Steifigkeit des Abdrucksubstrats 102 kann eine gute und effiziente Handhabung gewährleistet sein, wobei unterschiedliche Grammaturen vorgesehen sein können, um den Einfluss der Steifigkeit des Abdrucksubstrats 102 auf das Testergebnis zu reduzieren.

Bei einem steiferen Abdrucksubstrat 102 kann es vorteilhaft sein, dass die umlaufenden Kanten 112, 114, 116, 118 des Abdrucksubstrates gemäß einem Aspekt der Erfindung gerundet oder mit einer Fase, in anderen Worten, einer abgeschrägten Fläche, versehen sind, wie in Fig. 1 dargestellt.

Eine Schablone 120 kann vorgesehen sein zur Analyse des Druckstellenbilds eines Patienten, der auf das Abdrucksubstrat 102 gebissen hat. Die Schablone 120 kann eine bogenförmige Form aufweisen wie in Fig. 1 gezeigt, ähnlich der Form des Abdrucksubstrats 102. Die Schablone 120 weist eine vordere Aussparung 122 und eine erste hintere Aussparung 124 sowie eine zweite hintere Aussparung 126 auf.

Bei einem entsprechenden Auflegen der Schablone 120 auf das Abdrucksubstrat 102 wie in Fig. 1 gezeigt, bleiben ein vorderer Bereich 132 des Abdrucksubstrats 102 sowie ein erster hinterer Bereich 134 und ein zweiter hinterer Bereich 136 des Abdrucksubstrats 102 frei, während die übrigen Bereiche des Abdrucksubstrates 102 mit Ausnahme des Griffbereichs 101 durch die Schablone 120 abgedeckt sind.

In der Regel sollen in den freigelassenen Bereichen 132, 134, 136 des Abdrucksubstrats 102 keine Bisskontakte sichtbar sein, das heisst bei einem Zusammenbeissen des Ober- und Unterkiefers auf das Abdrucksubstrat sollten in den freigelassenen Bereichen 132, 134, 136 keine Bissspuren bzw. Zahnkontakte zu sehen sein. Falls in den freigelassenen Bereichen 132, 134, 136 Kontakte zu sehen sind, sollte eine nähere bzw. genauere Untersuchung (Differentialdiagnostik) des Patienten erfolgen zur Abklärung von Cranio-Mandibuläten Dysfunktionen. Demnach kann die Schablone 120 zur Analyse des Druckstellenbildes eines Patienten dienen, um beispielsweise die Möglichkeit einer Cranio-Mandibuläten Dysfunktion festzustellen.

Wie in der seitlichen Querschnittansicht der Vorrichtung 100 in Fig. 2 gezeigt, weist das Abdrucksubstrat 102 eine Trägerschicht 104 und eine darauf angeordnete Signalschicht 106 auf. Die Signalschicht 106 kann eine Farbschicht sein, die an einer Druckstelle die Farbe verändert, wobei die Trägerschicht 104 eine andere Farbe aufweisen kann als die Signalschicht 106. Die Druckstelle kann noch deutlicher sichtbar werden, wenn sich die Signalfarbe durch eine Schwächung der Farbe durch Verdrängung der Substanz unter einer Berührstelle eines Zahns verändert oder zur Seite geschoben wird und die Farbe der Trägerschicht 104 an der Druckstelle durchscheint.

Figur 3 zeigt eine seitliche Querschnittansicht eines Abdrucksubstrats 102 der Vorrichtung 100 zum sichtbar machen von Zahnfehlkontakten beim menschlichen Kieferschluss (Okklusion). Das Abdrucksubstrat 102 weist eine obere Trägerschicht 108 und eine untere Trägerschicht 110 auf, die zwischen sich eine Signalschicht 106 sandwichartig einschließen. Durch eine derartige Anordnung können beispielsweise die jeweiligen Kontaktpunkte der Zähne an dem Abdrucksubstrat 102 mit hoher Sicherheit verifizierbar sein, da eine optische Veränderung sowohl auf der Oberseite als auch auf der Unterseite der Substratlage zu erkennen ist.

Gemäß den Ausführungen der Figuren 1 bis 4 kann die Signalschicht 106 eine Farbschicht sein, deren Farbpartikel unter Druck die Trägerschicht(en) 104, 108, 110 durchdringen und von außen auf der Trägerschicht 104, 108, 110 sichtbar sind. Die Signalschicht 106 kann unter einer Druckbelastung des Bisses plastisch verformbar sein und dem Druck ausweichen, so dass die Trägerschicht 104, 108, 110 an dieser Stelle freigelegt und/oder zumindest teilweise sichtbar ist.

Figur 4 zeigt eine seitliche Querschnittansicht eines Ausschnitts einer Vorrichtung 100 zum sichtbar machen von Zahnfehlkontakten beim menschlichen Kieferschluss (Okklusion) 400 mit einem Abdrucksubstrat 102 gemäß Figur 2, das zwischen einem Oberkiefer 402 und einem Unterkiefer 404 angeordnet ist. Bei einem Bissvorgang wird der Oberkiefer 402 mit den oberen Zähnen 403 in eine erste Richtung 408 nach unten bewegt, so dass von den oberen Zähnen 403 (in Figur 4 der linke obere Zahn 403) an entsprechenden oberen Kontaktstellen 414 der oberen Zähne 403 (gemäß Figur 4 des linken oberen Zahns 403) mit dem Abdrucksubstrat 102 ein oberer Druck 410 auf das Abdrucksubstrat 102 ausgeübt wird. Bei dem Bissvorgang bewegt sich der Unterkiefer 404 in eine zweite Richtung 409 nach oben, entgegengesetzt zur ersten Richtung 408, so dass das Abdrucksubstrat 102 der Vorrichtung 100 zwischen den oberen Zähnen 403 und den unteren Zähnen 405 beim Zubeissen eingeklemmt bzw. an einer bestimmten Stelle gehalten wird. Von den unteren Zähnen 403 (in Figur 4 der rechte untere Zahn 405) wird an entsprechenden unteren Kontaktstellen 416 der unteren Zähne 405 (gemäß Figur 4 des rechten unteren Zahns 405) mit dem Abdrucksubstrat 102 ein unterer Druck 412 auf das Abdrucksubstrat 102 ausgeübt.

Das Abdrucksubstrat 102 kann im Wesentlichen eine Form eines Bogenrings gemäß Figur 1, eines halben Ellipsenrings oder eines Halbkreisrings aufweisen und zwischen die Zähne 403, 405 des Oberkiefers 402 und des Unterkiefers 404 des Benutzers gelegt werden, wie in Figur 4 gezeigt. Das Abdrucksubstrat 102 zeigt unter Druck 410, 412 den genauen Ort des Drucks bzw. die entsprechenden Kontaktstellen 414, 416 an, beispielsweise über ein Druckstellenbild des Kiefer-Bisses auf dem Abdrucksubstrat 102.

Obwohl die Erfindung unter Bezugnahme auf die Ausführungsbeispiele und Aspekte beschrieben wurde, können verschiedene Änderungen und Modifikationen vorgenommen werden, ohne den Schutzbereich der Erfindung zu verlassen.

Ergänzend ist darauf hinzuweisen, dass "umfassend" oder "aufweisend" keine anderen Elemente oder Schritte ausschließt und "eine" oder "ein" keine Vielzahl ausschließt.

Ferner sei darauf hingewiesen, dass Merkmale, die mit Verweis auf eines der obigen und folgenden Ausführungsbeispiele und Aspekte beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Vorrichtung (100) zum sichtbar machen von Zahnfehlkontakten beim menschlichen Kieferschluss (Okklusion) (400) als Ursache von durch die Fehlkontakte hervorgerufenen Beschwerden wie Verspannung der Kiefermuskulatur, Kopfschmerzen oder psychischen Symptomen, **gekennzeichnet durch** ein flächiges Abdrucksubstrat (102), das im Wesentlichen eine Form eines Bogenrings, eines halben Ellipsenrings oder eines Halbkreisrings aufweist und zwischen die Zähne (403, 405) des Oberkiefers (402) und des Unterkiefers (404) gelegt werden kann, und das unter Druck (410, 412) den genauen Ort des Drucks (414, 416) anzeigt.

2. Vorrichtung (100) nach Anspruch 1, **dadurch gekennzeichnet, dass** das flächige Abdrucksubstrat (102) zumindest eine Trägerschicht (104) und eine darauf angeordnete Signalschicht (106) aufweist.

3. Vorrichtung (100) nach Anspruch 1 oder 2, **dadurch gekennzeichnet, dass** die Signalschicht (106) eine Farbschicht ist, die an einer Druckstelle (414, 416) die Farbe verändert, wobei die Trägerschicht (104) eine andere Farbe aufweist als die Signalschicht (106).

4. Vorrichtung (100) nach einem der Ansprüche 1 bis 3, **dadurch gekennzeichnet, dass** eine obere Trägerschicht (108) und eine untere Trägerschicht (110) zwischen sich eine Signalschicht (106) sandwichartig einschließen.

5. Vorrichtung (100) nach Anspruch 3 oder 4, **dadurch gekennzeichnet, dass** die Signalschicht (106) eine Farbschicht ist, deren Farbpartikel unter Druck (410, 412) die Trägerschicht (104) durchdringen und von außen auf der Trägerschicht (104) sichtbar sind.

6. Vorrichtung (100) nach einem der vorhergehenden Ansprüche, **dadurch gekennzeichnet, dass** das die Signalschicht (106) unter der Druckbelastung des Bisses plastisch verformbar ist und dem Druck ausweicht und die Trägerschicht (104) an dieser Druckstelle (414, 416) freigelegt und/oder zumindest teilweise sichtbar ist.

7. Vorrichtung (100) nach einem der vorhergehenden Ansprüche, **dadurch gekennzeichnet, dass** das Abdrucksubstrat (102) ein Flächengewicht aufweist von zumindest 25g/m² mit einer Festigkeit, wie sie z.B. bei Papier mit einer Grammatur von zumindest 25g/m² vorhanden ist, vorzugsweise 80g/m² bis 120g/m² mit einer dementsprechenden Festigkeit.

8. Vorrichtung (100) nach einem der vorhergehenden Ansprüche, **dadurch gekennzeichnet, dass** das Abdrucksubstrat (102) zumindest einen Griffbereich (101) zum Ergreifen und Handhaben der Vorrichtung (100) aufweist.

9. Vorrichtung (100) nach einem der vorhergehenden Ansprüche, **dadurch gekennzeichnet, dass** die umlaufenden Kanten (112, 114) des Abdrucksubstrats (102) gerundet oder mit einer Fase versehen sind.
